# FASCICULE DE BREVET EUROPEEN

(11) **EP 2 931 019 B1**
(45) Date de publication et mention de la délivrance du brevet: **31.03.2021**
(21) Numéro de dépôt: 13808105.4
(22) Date de dépôt: 25.11.2013
(51) Int. Cl.: A01C 7/08

(54) **DISPOSITIF POUR UNE ALIMENTATION PNEUMATIQUE AUTOREGULEE AVEC UN MOYEN POUR REGLER LA SECTION DE PASSAGE D'AIR**
VORRICHTUNG FÜR EINE SELBSTGEREGELTE PNEUMATISCHE STROMVERSORGUNG MIT MITTEL ZUR REGULIERUNG EINES LUFTDURCHTRITTSABSCHNITTS
DEVICE FOR A SELF-REGULATED PNEUMATIC SUPPLY WITH A MEANS FOR REGULATING THE AIR PASSAGE SECTION

(30) Priorité: 26.11.2012 FR 1261236
(43) Date de publication de la demande: 21.10.2015
(73) Titulaire: Kuhn SAS, 67700 Saverne (FR)
(72) Inventeur: AUDIGIE, Jean-Charles, 67330 Bouxwiller (FR); EBERHART, Julien, 57370 Veckersviller (FR); SUPPER, Nicolas, 67310 Dangolsheim (FR)
(74) Mandataire: Esch, Esther Evelyne
(86) Numéro de dépôt international: PCT/FR2013/052841
(87) Numéro de publication internationale: WO 2014/080147

(56) Documents cités:
- AU-B2- 538 715
- FR-A1- 2 730 713
- US-A- 4 060 181

## Description

La présente invention se rapporte au domaine technique général du machinisme agricole. L'invention concerne un dispositif pour une alimentation pneumatique autorégulée à partir d'un réservoir principal contenant du produit vers au moins un réservoir auxiliaire en fonction de son taux de remplissage, ledit dispositif d'alimentation comprenant une source d'air comprimé, un conduit incliné relié à une tuyauterie, un conduit d'air à double flux présentant un premier canal débouchant près de la sortie dudit réservoir principal et un second canal débouchant près de l'entrée de ladite tuyauterie pour emmener du produit jusqu'audit réservoir auxiliaire.

Un tel dispositif d'alimentation pneumatique autorégulée est connu par le document FR 2 340 031**.** Ce dispositif comprend notamment un conduit d'air à double flux présentant un premier canal dont le convergent débouche près de la sortie du réservoir principal pour emmener des graines sur un parcours ascendant et un second canal dont le convergent débouche près de l'entrée de la tuyauterie de transport pour emmener les graines jusqu'audit réservoir auxiliaire. Le flux d'air émis par le premier canal sert à extraire les graines du réservoir principal et à les entraîner sur un parcours ascendant. Les graines sont alors reprises par le flux d'air émis par le second canal pour être transportées jusqu'aux réservoirs auxiliaires.

Les documents US 4 060 181 et FR 2 730 713 décrivent des dispositifs semblables avec les caractéristiques du préambule de la revendication 1.

Le document AU 538 715 divulgue des solutions pour régler la section de passage d'air d'un seul venturi.

En pratique, un tel dispositif d'alimentation équipe un semoir qui est amené à implanter tous types de graines. Ce dispositif d'alimentation doit donc assurer un approvisionnement vers les réservoirs auxiliaires que les graines soient légères ou lourdes et faciles ou difficiles à transporter. En général, le flux d'air traversant le second canal est plus important que le flux d'air traversant le premier canal. Cette différence de débit d'air est obtenue par la différence de section du col des canaux. Pour s'adapter au type de graines à distribuer, l'utilisateur change la pression et donc le flux d'air produit par la source d'air comprimé. Une telle modification affectera le flux d'extraction des graines et le flux de transport. Le flux d'air que fourni la source d'air comprimé résulte d'un compromis entre le flux d'extraction et le flux de transport. Le flux de transport doit être suffisant pour embarquer les graines jusqu'aux réservoirs auxiliaires sans que le flux d'extraction entraîne trop de graines de la tuyauterie. Avec un flux d'extraction trop important, l'alimentation en graines des réservoirs auxiliaires est irrégulière, elle se fait par paquets. Un tel approvisionnement de graines par paquets requiert des amorçages fréquents du dispositif d'alimentation.

La présente invention a pour but de remédier aux inconvénients précités. Elle doit notamment proposer un dispositif pour une alimentation pneumatique à distance avec un fonctionnement régulier et polyvalent.

A cet effet, une importante caractéristique consiste en ce que chacun des canaux comprend un moyen respectif configuré pour régler la section de passage d'air le traversant. Grâce à cette caractéristique, l'un des flux d'air peut être adapté selon le produit à distribuer vers au moins un réservoir auxiliaire. Un tel réglage est particulièrement intéressant puisqu'il permet d'être adapté à la capacité du produit à se faire embarquer ou à la capacité du produit à se faire extraire sans intervenir sur la pression et le flux d'air de la source d'air comprimé. La continuité de prise de produit et donc le transport de produit vers les réservoirs auxiliaires sont assurés de façon régulière.

Selon une autre importante caractéristique, un moyen configuré pour régler la section de passage d'air est disposé dans chaque canal. Le réglage indépendant du flux d'extraction et de celui du flux de transport de produit permet une adaptation optimale selon le produit à distribuer. L'alimentation des réservoirs auxiliaires se fait de façon régulière.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une coupe simplifiée d'un dispositif d'alimentation conforme à l'invention,
- la **figure 2** montre une vue de côté d'une machine distributrice munie d'un dispositif d'alimentation selon l'invention,
- la **figure 3** représente une coupe simplifiée d'un autre dispositif d'alimentation conforme à l'invention.

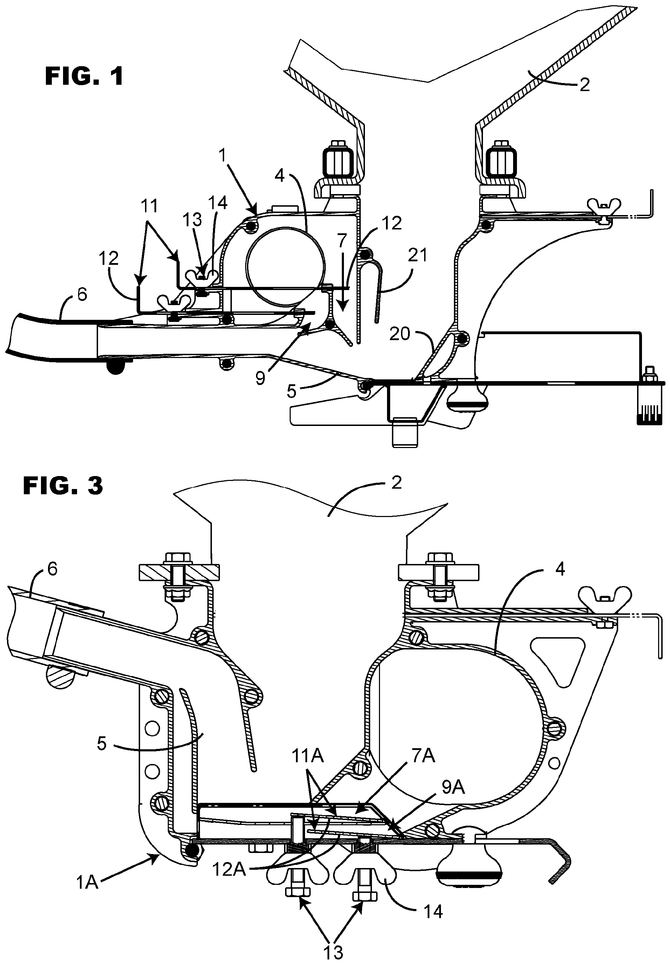

La figure 1 montre de façon simplifiée un dispositif (1) pour une alimentation à distance pneumatique autorégulée à partir d'un réservoir principal (2) avec du produit vers au moins un réservoir auxiliaire (3) en fonction de son taux de remplissage. Il s'agit d'une alimentation pneumatique autorégulée. Le dispositif d'alimentation (1) est monté adjacent à la partie inférieure du réservoir principal (2). Le dispositif d'alimentation (1) est raccordé à la sortie du réservoir principal (2). Le dispositif d'alimentation (1) comprend une source d'air comprimé (4), un conduit incliné (5) relié à une tuyauterie (6), un conduit d'air à double flux présentant un premier canal (7) qui débouche près de la sortie du réservoir principal (2) et un second canal (9) qui débouche près de l'entrée de la tuyauterie (6) pour emmener du produit jusqu'audit réservoir auxiliaire (3). Le produit à distribuer est, par exemple, du produit en grains tel que des graines, de l'engrais ou de la poudre. Dans la suite de la description, on considèrera du produit tel que des graines, celles-ci ne sont pas représentées sur les figures. Le conduit incliné (5) raccorde la partie inférieure du réservoir principal (2) à la tuyauterie (6) qui communique avec les réservoirs auxiliaires (3). Le conduit incliné (5) comporte une partie ascendante.

D'après la figure 1, le premier canal (7) débouche dans le conduit incliné (5) près de la sortie du réservoir principal (2). Ce premier canal (7) est orienté vers le bas pour diriger un flux d'air sensiblement transversalement à la sortie du réservoir principal (2). Le flux d'air émis par le premier canal (7) sert à prendre des graines descendant par gravité vers la sortie du réservoir principal (2) et à l'envoyer dans le conduit incliné (5). Le produit est alors repris par le flux d'air émis par le second canal (9) qui les transporte jusqu'aux réservoirs auxiliaires (3) par la tuyauterie (6). Le second canal (9) débouche légèrement en aval de la tuyauterie de transport (6), à l'autre extrémité du conduit incliné (5). Le second canal (9) est orienté obliquement par rapport au conduit incliné (5) de façon à diriger le flux d'air sensiblement dans l'axe de la tuyauterie (6). Du fait de leur situation d'un même côté du réservoir principal (2) et de leurs orientations sensiblement orthogonales, les convergents des deux canaux (7 et 9) ont leurs entrées accolées. Une seule et même source d'air comprimé (4) alimente les deux canaux (7, 9). Le flux d'air, produit par le premier canal (7), permet de piocher les graines ou le produit au fond du réservoir principal (2) et le flux d'air, produit par le second canal (9), permet d'embarquer les graines ou le produit vers les réservoirs auxiliaires (3).

Le dispositif d'alimentation (1) pneumatique autorégulé permet d'alimenter plusieurs réservoirs auxiliaires (3) en produit à partir d'un réservoir principal (2) de grande capacité. Lorsque l'alimentation est conditionnée par le taux de remplissage du réservoir auxiliaire (3), l'alimentation dudit réservoir auxiliaire (3) est arrêtée pour éviter que ce dernier ne déborde. Comme le produit est dosé en sortie du réservoir auxiliaire (3), le réservoir principal (2) est dépourvu de système de dosage de produit.

En fonctionnement, le tas de graines amoncelé dans le réservoir principal (2) s'éboule et s'écoule par la sortie grâce au flux d'air créé par le premier canal (7). Ce flux d'air décolle les graines et les achemine en direction de la tuyauterie (6) à travers le conduit incliné (5) puis elles sont entraînées par le courant d'air émis par le second canal (9) et envoyées dans les réservoirs auxiliaires (3) à travers la tuyauterie (6). La différence de résistance à l'écoulement de l'air soufflé par les canaux (7 et 9) vers la tuyauterie (6) varie en fonction du taux de remplissage du (ou des) réservoir(s) auxiliaire(s) (3). Grâce à la disposition du conduit incliné (5) et à son raccordement latéral à la partie inférieure du réservoir principal (2), le risque de bourrage, dû aux graines qui s'accumuleraient au fond du réservoir principal (2), est réduit. La disposition et l'orientation du convergent du premier canal (7) permet de créer une zone de haute turbulence au niveau de la sortie du réservoir principal (2). Le courant d'air créé par le premier canal (7) provoque un éboulement continu des graines, leur détachement et leur transfert à travers le conduit incliné (5).

Selon une importante caractéristique de l'invention, chaque canal (7, 9) comprend un moyen (11) configuré pour régler la section de passage d'air le traversant (7, 9). Grâce à cette caractéristique, le flux d'air peut être adapté de manière optimale au produit à distribuer sans régler la pression de flux d'air de la source d'air comprimé (4). L'adaptation se fait en fonction de la capacité des graines à se faire embarquer et/ou en fonction de leur capacité à se faire extraire. L'un des flux d'air est donc réglé indépendamment de l'autre flux d'air et du flux d'air émis par la source d'air comprimé (4) pour conduire à une alimentation régulière des réservoirs auxiliaires (3) en graines. Le réglage se fait donc soit pour le flux d'air émis par le premier canal (7) qui prend et dirige les graines vers le conduit incliné (5) ou pour le flux d'air émis par le second canal (9) qui achemine les graines vers les réservoirs auxiliaires (3). Le flux d'air produit peut donc être réglé de manière à être optimal, c'est-à-dire un flux d'air minimal mais suffisant pour assurer le piochage ou l'acheminement des graines.

De manière privilégiée et représentée à la figure 1, le moyen (11), configuré pour régler la section de passage d'air traversant un canal (7, 9), s'étend à l'entrée dudit canal (7, 9). Dans la réalisation représentée, l'agencement du moyen (11) au niveau de l'entrée du canal (7, 9) est plus simple à réaliser. Dans une alternative non représentée, le moyen (11) s'étend à la sortie du canal (7, 9). Le moyen (11) permet de régler la section de passage d'air au niveau de la sortie de l'un des canaux (7, 9).

Selon l'invention, chaque canal (7 et 9) comporte un moyen (11) configuré pour régler la section de passage d'air le traversant. De cette manière, le flux d'air émis par le premier canal (7) comme le flux d'air émis par le second canal (9) peut être adapté de manière optimale en fonction de la taille et de la forme des graines en maintenant une pression constante fournie par la source d'air comprimé (4). Le dispositif d'alimentation (1) de la figure 1 dispose donc de deux moyens (11) indépendants pour régler la section de passage d'air des canaux (7, 9). Un moyen (11) est disposé sensiblement à l'entrée du premier canal (7) et un moyen (11) est disposé sensiblement à l'entrée du second canal (9). Le réglage du flux d'air pour la prise de graines est indépendant du réglage du flux d'air pour l'embarquement ou le transport des graines. Le dispositif d'alimentation (1) selon l'invention permet donc une alimentation régulière des réservoirs auxiliaires (3) en limitant le nombre de mise en route.

Dans l'exemple de réalisation de la figure 1, le moyen (11) configuré pour régler la section de passage d'air traversant un canal (7, 9) est un système coulissant. Le système coulissant présente une pièce mobile (12) destinée à se mouvoir en translation dans une coulisse ou pièce fixe. La coulisse permettant de guider le déplacement de la pièce mobile (12). Selon le réglage, la pièce mobile (12) est amenée à obstruer plus ou moins l'entrée en air comprimé à travers le canal (7, 9) et donc à modifier le flux d'air émis par le canal (7, 9). Lorsque la section de passage d'air est réglée via le système coulissant, la position de la pièce mobile (12) est verrouillée via un système de verrouillage (13). Le système de verrouillage (13) représenté est un système à vis et écrou. Afin de faciliter la manipulation et le réglage, le système de verrouillage (13) est pourvu d'un écrou papillon (14). Le réglage illustré à la figure 1 correspond à un flux d'air pour petites graines. Chaque pièce mobile (12) respectivement chaque moyen (11) bouche partiellement l'entrée des canaux (7, 9). Lors d'une distribution à distance de grosses graines, il est prévu que les moyens (11) ne bouchent pas ou seulement partiellement le passage d'air au travers des canaux (7, 9). Les pièces mobiles (12) sont complètement retirées, laissant la section de passage d'air en entrée sans obstacle. La partie mobile (12), respectivement le moyen (11) configuré pour régler la section de passage d'air, est également utilisé pour neutraliser un rang de semis. Dans ce cas, la partie mobile (12) respectivement le moyen (11) est placé dans une position qui ferme totalement le passage d'air au travers du canal (7, 9).

Le dispositif d'alimentation (1) présente, en sus, un fond incliné (20). Ce fond incliné (20) s'étend dans la partie inférieure du dispositif d'alimentation (1), à l'opposée de la sortie du réservoir principal (2). A la base du fond incliné est ménagée une fente dont la fonction est d'assurer une vidange totale du dispositif d'alimentation (1). La fente s'étend sur toute la largeur du dispositif d'alimentation (1). En envoyant de l'air par la fente, les dernières graines sont soufflées hors du dispositif d'alimentation (1) vers le conduit incliné (5). La fente est reliée à la source d'air comprimé (4) ou à une autre source d'air. On peut prévoir une alimentation de la fente rang par rang par le dessous ou de manière globale par le côté.

Dans une alternative, le moyen (11), configuré pour régler la section de passage d'air traversant un canal (7, 9), est un système amovible. Le système amovible est constitué de différentes pièces mobiles (12) dont l'une est à glisser dans la coulisse en fonction du réglage souhaité. Le système amovible utilise aussi un système coulissant. Chacune des pièces mobiles (12) présentent une ouverture différente qui permet de créer des sections de passage d'air différentes. Un tel système amovible permet de mettre en œuvre des réglages prédéfinis en fonction du type de graines à distribuer. La pièce mobile (12) mise en place au niveau du canal (7, 9) est verrouillée via un système de verrouillage (13).

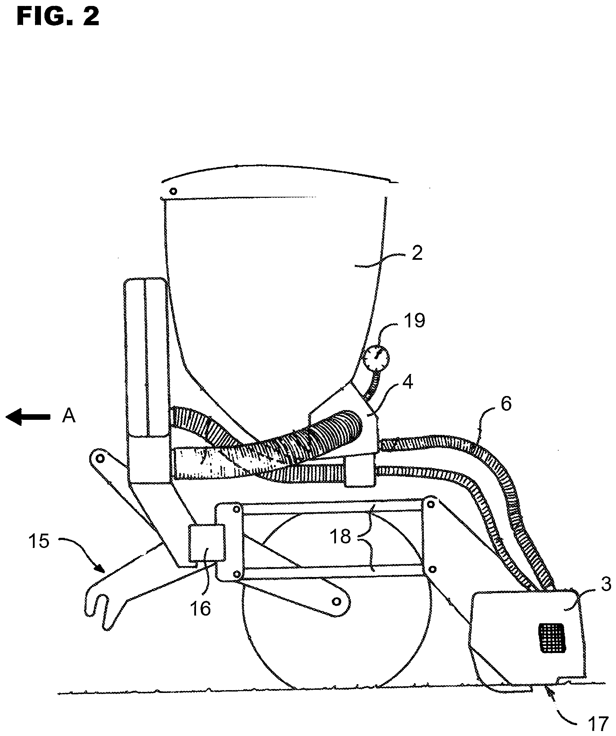

La figure 2 est une vue latérale d'une machine agricole (15) munie d'un dispositif d'alimentation (1) à distance selon l'invention. La machine agricole (15) représentée est un semoir. Il s'agit d'un semoir de précision ou monograine à distribution pneumatique ou mécanique. Un tel semoir distribue les graines une à une sur la ligne de semis à des écartements constants. La machine agricole (15) comporte un châssis (16) sur lequel sont répartis de manière régulière des éléments semeurs (17). Le châssis (16) porte le réservoir principal (2). Chaque élément semeur (17) possède un réservoir auxiliaire (3) et un organe de mise en terre. Le nombre d'éléments semeurs (17) ou de réservoirs auxiliaires (3) correspond au nombre de rangs de semis. Chaque élément semeur (17) est monté sur le châssis (16) au moyen d'un parallélogramme déformable (18) qui lui permet de se déplacer parallèlement au sol. L'organe de mise en terre est réalisé par un soc permettant de mettre les graines dans la terre. Le dispositif d'alimentation (1) permet une alimentation à distance des réservoirs auxiliaires (3) à partir du réservoir principal (2). L'alimentation est réalisée de manière individuelle via un tuyau respectif et en fonction du taux de remplissage du réservoir auxiliaire (3). L'accumulation de produit dans le réservoir auxiliaire (3) provoque une perte de charge qui ralentit suffisamment le flux d'air dans le conduit incliné (5) pour empêcher le transport des graines. L'alimentation du réservoir auxiliaire (3) est donc interrompue lorsqu'il est plein. Lorsque le réservoir auxiliaire (3) s'est vidé, la perte de charge diminue et le transport de graines reprend. Le dispositif d'alimentation (1) permet donc une alimentation autorégulée en fonction du taux de remplissage du réservoir auxiliaire (3). La source d'air comprimé (4) du dispositif d'alimentation (1) pneumatique est muni d'un manomètre (19).

Le réservoir principal (2) présente, attachée à sa paroi intérieure et proche de la sortie, une crosse (21). La fonction de cette crosse (21) est d'améliorer la fluidisation des graines au moment de leur aspiration par le premier canal (7). L'amorçage du dispositif d'alimentation (1) est facilité grâce à la crosse (21).

Le dispositif d'alimentation (1) est constitué d'éléments symétriques formant chacun deux moitiés de premiers canaux (7) adjacents et deux moitiés de seconds canaux (9) adjacents et permettant d'obtenir par assemblage un bloc de conduits étanches, le nombre de conduits étanches est au moins égal au nombre de réservoirs auxiliaires (3). Les éléments symétriques sont obtenus par moulage. Lorsque ces éléments symétriques sont réalisés dans une matière transparente, il est possible de surveiller le fonctionnement général et des différents rangs de semis. Il est alors aisé de détecter le (ou les) rang(s) bouché(s). D'une manière avantageuse, il est prévu au moins un conduit étanche supplémentaire permettant la vidange du réservoir principal (2).

La figure 3 montre une coupe simplifiée d'un dispositif (1A) pour une alimentation pneumatique autorégulée selon une autre réalisation. Ce dispositif d'alimentation (1A) diffère de celui de la figure 1, par la disposition des canaux (7A, 9A) par rapport à la sortie du réservoir principal (2). Les canaux (7A, 9A) s'étendent sensiblement en dessous du réservoir principal (2). Chaque flux d'air est dirigé vers un canal distinct, les deux flux d'air sont séparés. Le canal supérieur reçoit le flux d'air émis par le premier canal (7A) pour la prise des graines et le canal inférieur reçoit le flux d'air émis par le second canal (9A) pour le transport des graines. Le premier canal (7A) débouche près de la sortie du réservoir principal (2) et le second canal (9A) débouche près de l'entrée de la tuyauterie (6). Le moyen (11A) configuré pour régler la section de passage d'air traversant le canal (7A, 9A) est un système pivotant. Le système pivotant présente une pièce mobile (12A) destinée à se mouvoir en rotation. Une des extrémités de la pièce mobile (12A) est solidaire du fond du dispositif d'alimentation (1) alors que l'autre extrémité est libre. Le réglage consiste à soulever l'extrémité libre de la pièce mobile (12A) pour obstruer plus ou moins l'entrée au niveau du canal (7A, 9A) et donc à modifier le flux d'air émis par le canal (7A, 9A). Le réglage se fait via une tige filetée sur laquelle est monté un écrou papillon (14), ce dernier facilitant la manipulation. La figure 3 illustre des moyens (11) réglés pour un flux d'air pour des petites graines, l'entrée des canaux (7, 9) est partiellement obstruée. Les possibilités décrites précédemment pour les grosses graines et pour neutraliser un rang sont possibles. Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de
protection tel qu'il est défini par les revendications suivantes.

## Revendications

1. Dispositif (1) pour une alimentation pneumatique autorégulée à partir d'un réservoir principal (2) contenant du produit vers au moins un réservoir auxiliaire (3) en fonction de son taux de remplissage, ledit dispositif d'alimentation (1) comprenant une source d'air comprimé (4), un conduit incliné (5) relié à une tuyauterie (6), un conduit à double flux présentant un premier canal (7) débouchant près de la sortie dudit réservoir principal (2) et un second canal (9) débouchant près de l'entrée de ladite tuyauterie (6) pour emmener du produit jusqu'audit réservoir auxiliaire (3), ***caractérisé en ce que*** chaque canal (7, 9) comprend un moyen (11) respectif configuré pour régler la section de passage d'air le traversant.

2. Dispositif d'alimentation selon la revendication 1, ***caractérisé en ce que*** ledit moyen (11) s'étend à l'entrée dudit canal (7, 9).

3. Dispositif d'alimentation selon la revendication 1, ***caractérisé en ce que*** ledit moyen (11) s'étend à la sortie dudit canal (7, 9).

4. Dispositif d'alimentation selon l'une quelconque des revendications 1 à 3, ***caractérisé en ce que*** chaque canal (7 et 9) comporte un moyen (11) configuré pour régler la section de passage d'air le traversant.

5. Dispositif d'alimentation selon l'une quelconque des revendications 1 à 4, ***caractérisé en ce que*** ledit moyen (11) est un système coulissant.

6. Dispositif d'alimentation selon l'une quelconque des revendications 1 à 5, ***caractérisé en ce que*** ledit moyen (11) est un système amovible.

7. Dispositif d'alimentation selon l'une quelconque des revendications 1 à 4, ***caractérisé en ce que*** ledit moyen (11) est un système pivotant.

8. Dispositif d'alimentation selon l'une quelconque des revendications 1 à 7, ***caractérisé en ce qu**'il* est constitué d'éléments symétriques formant chacun deux moitiés de premiers canaux (7) adjacents et deux moitiés de seconds canaux (9) adjacents et permettant d'obtenir par assemblage un bloc de conduits étanches, le nombre de conduits étanches est au moins égal au nombre de réservoirs auxiliaires (3).

9. Dispositif d'alimentation selon la revendication 8, ***caractérisé en ce qu**'il* est prévu au moins un conduit étanche supplémentaire.

10. Dispositif d'alimentation selon l'une quelconque des revendications 1 à 9, ***caractérisé en ce que*** les deux canaux (7, 9) sont alimentés par la même source d'air comprimé (4).

11. Dispositif d'alimentation selon l'une quelconque des revendications 1 à 10, ***caractérisé en ce que*** le conduit incliné (5) comporte une partie ascendante.

12. Semoir présentant un dispositif d'alimentation (1) selon l'une quelconque des revendications 1 à 11.

## Patentansprüche

1. Vorrichtung (1) für eine selbstregulierende pneumatische Versorgung aus einem Hauptbehälter (2), der ein Produkt enthält, in mindestens einen Zusatzbehälter (3) in Abhängigkeit von dessen Füllrate, wobei die Versorgungsvorrichtung (1) eine Druckluftquelle (4), eine schräge Leitung (5), die mit einer Rohrleitung (6) verbunden ist, eine Doppelstrom-Leitung umfasst, die einen ersten Kanal (7) aufweist, der in der Nähe des Auslasses des Hauptbehälters (2) mündet, und einen zweiten Kanal (9), der in der Nähe des Einlasses der Rohrleitung (6) mündet, um ein Produkt bis in den Zusatzbehälter (3) zu bringen, ***dadurch gekennzeichnet, dass*** jeder Kanal (7, 9) ein jeweiliges Mittel (11) umfasst, das ausgestaltet ist, um den Durchflussquerschnitt der durch ihn verlaufende Luft einzustellen.

2. Versorgungsvorrichtung nach Anspruch 1, ***dadurch gekennzeichnet, dass*** sich das Mittel (11) am Einlass des Kanals (7, 9) erstreckt.

3. Versorgungsvorrichtung nach Anspruch 1, ***dadurch gekennzeichnet, dass*** sich das Mittel (11) am Auslass des Kanals (7, 9) erstreckt.

4. Versorgungsvorrichtung nach irgendeinem der Ansprüche 1 bis 3, ***dadurch gekennzeichnet, dass*** jeder Kanal (7 und 9) ein Mittel (11) umfasst, das ausgestaltet ist, um den Durchflussquerschnitt der ihn durchlaufende Luft einzustellen.

5. Versorgungsvorrichtung nach irgendeinem der Ansprüche 1 bis 4, ***dadurch gekennzeichnet, dass*** das Mittel (11) ein Gleitsystem ist.

6. Versorgungsvorrichtung nach irgendeinem der Ansprüche 1 bis 5, ***dadurch gekennzeichnet, dass*** das Mittel (11) ein abnehmbares System ist.

7. Versorgungsvorrichtung nach irgendeinem der Ansprüche 1 bis 4, ***dadurch gekennzeichnet, dass*** das Mittel (11) ein Schwenksystem ist.

8. Versorgungsvorrichtung nach irgendeinem der Ansprüche 1 bis 7, ***dadurch gekennzeichnet, dass*** sie aus symmetrischen Elementen besteht, die jeweils zwei Hälften erster benachbarten Kanäle (7) und zwei Hälften zweiter benachbarten Kanäle (9) bilden und die es ermöglichen, durch Zusammenbau einen Block dichter Leitungen zu erhalten, wobei die Anzahl der dichten Leitungen mindestens gleich hoch ist wie die Anzahl der Zusatzbehälter (3).

9. Versorgungsvorrichtung nach Anspruch 8, ***dadurch gekennzeichnet, dass*** mindestens eine zusätzliche dichte Leitung vorgesehen ist.

10. Versorgungsvorrichtung nach irgendeinem der Ansprüche 1 bis 9, ***dadurch gekennzeichnet, dass*** die zwei Kanäle (7, 9) von derselben Druckluftquelle (4) versorgt werden.

11. Versorgungsvorrichtung nach irgendeinem der Ansprüche 1 bis 10, ***dadurch gekennzeichnet, dass*** die schräge Leitung (5) einen aufsteigenden Teil umfasst.

12. Sämaschine, die eine Versorgungsvorrichtung (1) nach irgendeinem der Ansprüche 1 bis 11 aufweist.

## Claims

1. Device (1) for a self-regulated pneumatic supply from a main reservoir (2) containing product toward at least one auxiliary reservoir (3) according to its filling rate, the said supply device (1) comprising a compressed air supply (4), a tilted duct (5) connected to pipe connections (6), a bypass duct having a first channel (7) emerging near the outlet of the said main reservoir (2) and a second channel (9) emerging near the inlet of the said pipe connections (6) to bring product to the said auxiliary reservoir (3), ***characterized in that*** each channel (7, 9) comprises a respective mean (11) configured to adjust the passage section of air passing through it.

2. Supply device according to claim 1, ***characterized in that*** the said mean (11) extends at the inlet of the said channel (7, 9).

3. Supply device according to claim 1, ***characterized in that*** the said mean (11) extends at the outlet of the said channel (7, 9).

4. Supply device according to any one of claims 1 to 3, ***characterized in that*** each channel (7 and 9) comprises a mean (11) configured to adjust the passage section for air passing through it.

5. Supply device according to any one of claims 1 to 4, ***characterized in that*** the said mean (11) is a sliding system.

6. Supply device according to any one of claims 1 to 5, ***characterized in that*** the said mean (11) is a removable system.

7. Supply device according to any one of claims 1 to 4, ***characterized in that*** the said mean (11) is a pivoting system.

8. Supply device according to any one of claims 1 to 7, ***characterized in that*** it is made of symmetrical elements each forming two halves of first adjacent channels (7) and two halves of second adjacent channels (9) and making it possible to obtain, by assembly, a block of tight ducts, the number of tight ducts is at least equal to the number of auxiliary reservoirs (3).

9. Supply device according to claim 8, ***characterized in that*** at least one additional tight duct is provided.

10. Supply device according to any one of claims 1 to 9, ***characterized in that*** the two channels (7, 9) are supplied by the same compressed air source (4).

11. Supply device according to any one of claims 1 to 10, ***characterized in that*** the tilted duct (5) comprises a rising portion.

12. Seeder having a supply device (1) according to any one of claims 1 to 11.
